# FASCICULE DE BREVET EUROPEEN

(11) **EP 2 707 638 B1**
(45) Date de publication et mention de la délivrance du brevet: **15.06.2016**
(21) Numéro de dépôt: 12728631.8
(22) Date de dépôt: 04.05.2012
(51) Int. Cl.: B60H 1/00, F16L 13/08, B25B 27/10, F16L 13/16, F16L 41/08

(54) **DISPOSITIF, OUTIL ET PROCEDE DE RACCORDEMENT PAR SERTISSAGE POUR CIRCUIT D'AIR CONDITIONNE**
CRIMPVERBINDUNGSVORRICHTUNG, WERKZEUG UND VERFAHREN FÜR EINEN KLIMATISIERUNGSKREISLAUF
CRIMP CONNECTION DEVICE, TOOL AND METHOD FOR AN AIR-CONDITIONING CIRCUIT

(30) Priorité: 09.05.2011 FR 1101421
(43) Date de publication de la demande: 19.03.2014
(73) Titulaire: Maflow France Automotive, 28000 Chartres (FR)
(72) Inventeur: FRANCOIS, Anthony, F-28500 Vernouillet (FR); GOMES, Jean-Michel, F-28150 Voves (FR); SENE, Philippe, F-78730 Ponthevrad (FR)
(74) Mandataire: Benech, Frédéric
(86) Numéro de dépôt international: PCT/FR2012/000180
(87) Numéro de publication internationale: WO 2012/153018

(56) Documents cités:
- EP-A1- 0 412 626
- EP-A1- 0 672 874
- EP-A1- 2 130 625
- WO-A1-96/16289
- WO-A2-2007/019270
- DE-A1- 1 600 511
- DE-A1- 10 248 986
- DE-A1-102008 017 805
- DE-U1-202006 001 525
- FR-A- 718 747
- US-A- 3 726 122
- US-A- 6 082 333
- US-A1- 2007 205 598

## Description

La présente invention concerne un dispositif de raccordement d'un circuit d'alimentation en fluide d'un manchon double enveloppe échangeur de chaleur avec un tube de circuit de circulation de fluide, ainsi qu'un outil pour former un tel sertissage.

Elle concerne également un procédé de formation d'un tel raccordement par sertissage.

Elle trouve une application particulièrement importante, bien que non exclusive, dans le domaine des dispositifs de raccordement pour échangeur de chaleur de circuit en aluminium d'air conditionné de véhicule.

De tels raccordements sont classiquement réalisés par brasage de l'enveloppe sur le tube, de façon à assurer une bonne étanchéité. Un exemple connu est divulgué dans le document US2007/0205598A1.

Dans le domaine de la climatisation une telle étanchéité est en effet particulièrement importante du fait de normes constructeurs contraignantes, ne tolérant qu'un débit de fuite très faible du fluide tel que par exemple inférieur à 5gr/an pour un circuit complet.

De tels systèmes présentent cependant des inconvénients.

Ils limitent tout d'abord le choix dans les matériaux utilisés pour les divers éléments du circuit. En particulier ils nécessitent des métaux identiques pour les portions devant être brasées l'une avec l'autre et excluent la présence de pièces en matière plastique à proximité du raccord compte tenu de l'échauffement dû au brasage.

On ne peut en effet utiliser des tuyaux souples ou en caoutchouc ou des valves de remplissage en matériaux synthétiques à proximité des zones de brasage, sous peine de détérioration.

Ces systèmes imposent ensuite de prendre en compte des contraintes géométriques très pénalisantes lors de la conception du circuit, en particulier pour permettre son montage, dans un espace de travail réduit, et ce avec le recul nécessaire pour braser correctement.

La manipulation par le monteur est de plus rendue difficile à cause de la petite taille des pièces, dont certaines devront être assemblées entre elles avant tout montage. Des risques de déformations lors de cette manipulation sont alors à craindre notamment lorsque le circuit est de grandes dimensions. Il est alors nécessaire de reprendre le cintrage des tubes et/ou tuyaux après montage d'une partie de ceux-ci pour garantir la bonne géométrie du circuit. Ces recintrages sont des opérations délicates et coûteuses.

Il est également difficile de tester intégralement le circuit d'alimentation en fluide caloporteur de la climatisation du véhicule avant le montage définitif.

La présente invention vise notamment à palier ces inconvénients.

Plus précisément la présente invention vise à fournir un dispositif, un outil et un procédé de raccordement répondant mieux que ceux antérieurement connus aux exigences de la pratique, notamment en ce qu'elle permet de raccorder les tuyaux d'arrivée et de sortie du circuit d'alimentation en fluide au manchon formant double enveloppe sans déformation et sans apport de chaleur, ce qui autorise notamment de s'affranchir des distances de sécurité autrement nécessaires entre la zone de raccord et les éléments plus fragiles du circuit de climatisation du véhicule.

Un tel raccordement se fait avec une grande facilité et une excellente modularité de fabrication et de montage, tout en permettant de respecter les contraintes d'étanchéité dans le temps imposées par les constructeurs automobiles. Il autorise ainsi une meilleure standardisation des raccords.

Enfin, avec l'invention, moins de pièces risquent d'être mal fabriquées et il en résulte donc moins de rebut.

Dans ce but la présente invention propose notamment un dispositif de raccordement d'un circuit d'alimentation en fluide d'un manchon double enveloppe échangeur de chaleur avec un tube de circuit d'air conditionné selon la revendication 1, comprenant au moins une bride de raccordement du circuit d'alimentation à la double enveloppe brasée d'un côté sur cette dernière, caractérisé en ce que ladite bride est fixée de l'autre côté sur le circuit d'alimentation par sertissage.

Ce faisant on évite l'opération de brasage d'au moins un des tuyaux du circuit d'alimentation sur la double enveloppe ce qui permet de s'affranchir des contraintes thermiques qui en résultent lors du montage.

Certes une opération de sertissage pose d'une part la question de l'étanchéité du raccord soumis aux vibrations de fonctionnement du véhicule dans le temps et d'autre part des problèmes de montage, l'exiguïté de l'espace de travail rendant en effet difficile l'utilisation d'outils.

En fait et de façon étonnante les inventeurs ont pu mettre en lumière d'une part qu'il était possible d'obtenir une excellente étanchéité par sertissage, et d'autre part, qu'un tel sertissage était possible grâce à la conception astucieuse d'un outil à sertir.

Dans des modes de réalisation on a de plus recours à l'une et/ou l'autre des dispositions suivantes :
- Le circuit d'alimentation comprenant un tuyau d'arrivée et un tuyau de sortie du fluide, et la bride comprenant un alésage latéral, de passage du fluide dans l'espace annulaire entre le manchon et le tube, ledit alésage étant raccordé à un tuyau du circuit par un raccord de connexion,
le raccord de connexion est formé, du côté du tuyau, par un embout mâle dudit tuyau comportant une lèvre en saillie définissant une extrémité d'embout comprenant au moins une gorge munie d'un joint torique d'étanchéité, et du côté de la bride, par un piquage solidaire de la bride comprenant une première portion proximale définissant l'alésage latéral coopérant à frottement doux avec l'extrémité d'embout et une deuxième portion distale, déformable, définissant une cavité coopérant à frottement avec la lèvre par dessus laquelle elle est sertie ;
- l'embout mâle comporte deux gorges munies respectivement d'un joint torique ;
- la portion distale déformable est de hauteur e comprise entre 6 et 4,5 mm;
- le dispositif comporte deux brides de raccordement serties sur un tuyau correspondant, à savoir une bride de raccordement sur le tuyau d'arrivée et une bride de raccordement sur le tuyau de sortie ;
- le circuit, les brides et les tuyaux sont en aluminium ;
- le dispositif comporte au moins une patte de fixation en matière plastique du tube et/ou des tuyaux sur le châssis du véhicule située à une distance d d'une bride < 30 mm.

L'invention propose également un outil de sertissage pour réaliser le dispositif tel que décrit ci-dessus. Un exemple connu est divulgué dans le document US3726122A1.

Il est ainsi possible de sertir de manière simple et économique un embout de tuyauterie situé dans une zone accidentée, à proximité de portions coudées notamment avec très peu de place pour réaliser un tel sertissage.

Cet outil permet de manière simple et économique de réduire significativement les efforts tant sur la bride solidaire de la double enveloppe et du tube par brasage que sur le tuyau raccordé par la bride.

La présente invention propose aussi un outil de sertissage d'un embout de tuyau sur une bride appartenant à un dispositif de raccordement d'un circuit d'alimentation en fluide d'un manchon double enveloppe échangeur de chaleur avec un tube de circuit d'air conditionné, caractérisé en ce que ladite bride comprenant une deuxième portion distale de passage du fluide propre à être sertie sur une extrémité du tuyau, l'outil comporte deux mâchoires amovibles propres à enserrer ladite bride, chacune munie d'une pièce de sertissage correspondante pour former une plaque lors du rapprochement des dites mâchoires, ladite plaque définissant alors un évidement central propre à coopérer avec la deuxième portion distale, la dite plaque étant mobile entre une première position éloignée des mâchoires, de centrage, et une deuxième position, de sertissage, en contact avec les mâchoires, pour écraser ladite deuxième portion distale sur l'extrémité du tuyau.

Avantageusement au moins un tuyau comporte un coude à une distance < à 15 mm, l'outil comportant de plus un élément d'appui sur le dessus de la plaque, pour un instrument de mise en pression ou de percussion, ledit élément étant muni d'une goulotte propre à inclure ledit coude et formant guide pour le tuyau à sertir.

L'invention propose également un procédé de raccordement tel que décrit ci-dessus.

Avantageusement l'invention propose aussi un procédé de sertissage d'un embout du tuyau sur une bride appartenant à un dispositif de raccordement d'un circuit d'alimentation d'un manchon double enveloppe échangeur de chaleur avec un tube de circuit d'air conditionné du véhicule, caractérisé en ce que ladite bride comprenant une deuxième portion distale, déformable, définissant une cavité et l'embout comprenant une lèvre en saillie, on insère la lèvre de l'embout du tuyau dans la cavité, on place sur la deuxième portion distale insérant la lèvre un outil de sertissage comportant deux mâchoires amovibles, chacune munie d'une pièce de sertissage correspondante pour former une plaque mobile munie d'un évidement central propre à coopérer à frottement avec ladite deuxième partie distale et on sertit ladite deuxième portion distale sur la lèvre en rapprochant les mâchoires l'une de l'autre et en faisant passer la plaque d'une première position éloignée des mâchoires à une deuxième position de sertissage, propre à écraser la deuxième portion distale de la bride sur la lèvre en exerçant une pression sur la face supérieure de la plaque.

La présente invention sera mieux comprise à la lecture de la description qui suit d'un mode de réalisation de dispositif et de modes de réalisation d'outils et/ou de procédé, donnés ci-après à titre d'exemples non limitatifs.

La description se réfère aux dessins qui l'accompagnent dans lesquels :
La figure 1 montre schématiquement une portion de circuit d'air conditionné pour véhicule automobile comportant deux dispositifs de raccordement selon l'invention.
La figure 2 est une vue en perspective d'un dispositif de raccordement selon un mode de réalisation d'invention, avant insertion de l'extrémité du tuyau dans la bride, la bride étant représentée en vue éclatée.
La figure 3 est une vue en perspective du dispositif de la figure 2 après sertissage.
Les figures 4A à 4D montrent les principales étapes du raccordement du dispositif de la figure 2, avec un outil de sertissage selon le mode de réalisation de l'invention plus particulièrement décrit ici.
La figure 5 est une coupe transversale selon V-V de la figure 4C.
La figure 6 est une coupe transversale d'un dispositif selon la figure 2, montrant un autre mode de réalisation de l'outil.
La figure 7 est une vue en coupe transversale de la plaque de sertissage selon le mode de réalisation des figures 5 et 6.

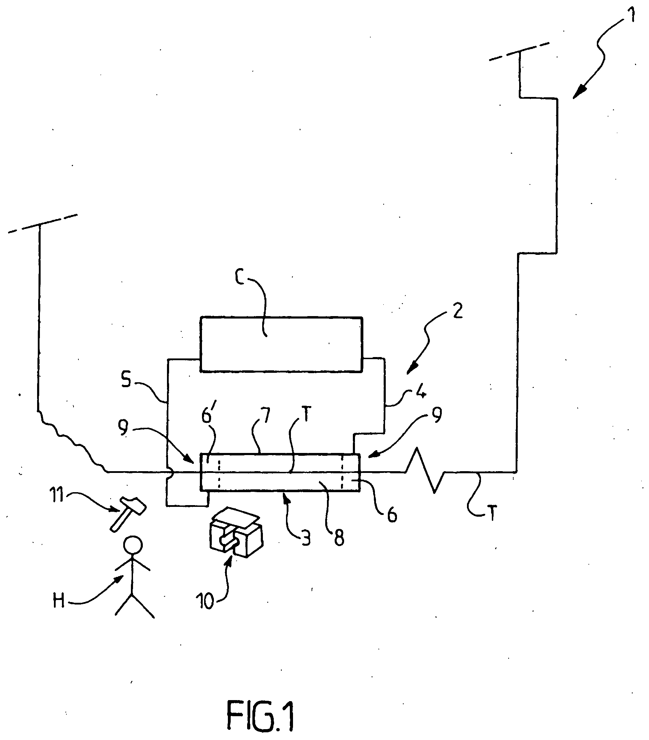

La figure 1 montre un circuit 1 d'air conditionné (partiel) pour véhicule automobile comprenant un circuit 2 d'alimentation en fluide d'un échangeur de chaleur 3 formé par une double enveloppe.

Le circuit 2 d'alimentation est connu en lui même et comprend par exemple un compresseur C. Le circuit 2 comporte également un tuyau 4 d'arrivée du fluide dans la double enveloppe 7 et un tuyau 5 de sortie du fluide.

Chacun des tuyaux 4 et 5 est relié à une bride 6, 6' de raccordement à la double enveloppe 7.

Celle-ci est formée par un manchon dans lequel le tube T est inséré et qui définit un espace annulaire 8 de circulation du fluide entre les deux brides 6 et 6', qui sont par exemple identiques et forment de part et d'autre de la double enveloppe, les dispositifs 9 selon le mode de réalisation de l'invention plus particulièrement décrit ici, avec les extrémités des tubes correspondants.

Comme cela va être décrit ci-après, chaque bride 6 et 6' est brasée sur la double enveloppe 7 et sur le tube T en atelier, puis est fixée in situ par sertissage sur le tuyau correspondant.

Une fois le circuit 1 en place dans le capot du véhicule un opérateur H actionne manuellement l'outil de sertissage 10 mis en place sur les brides 6 et 6', par exemple avec un instrument 11 de percussion et/ou de mise en pression.

Par la suite, les mêmes numéros de référence seront utilisés pour désigner des mêmes éléments ou des éléments similaires.

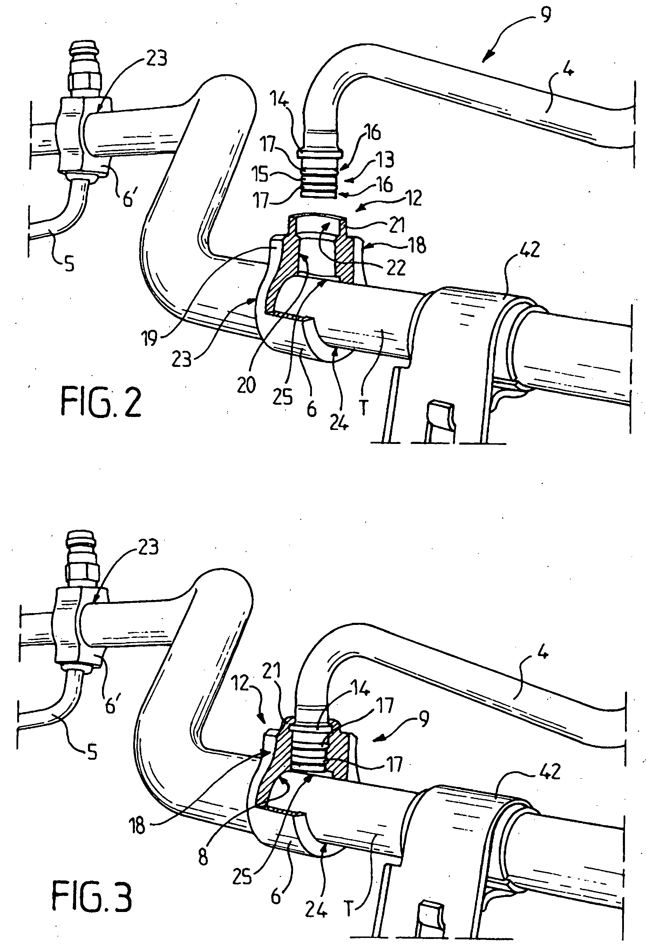

Les figures 2 et 3 montrent en perspective le dispositif 9 de raccordement selon le mode de réalisation de l'invention plus particulièrement décrit.

Il est formé par un raccord de connexion 12, comprenant du côté du tuyau 4 (ou 5) un embout mâle 13 comprenant une lèvre 14 en saillie définissant une extrémité d'embout cylindrique 15 comprenant deux gorges annulaires 16 munie chacune d'un joint torique 17 d'étanchéité, et du côté de la bride 6, 6'un piquage ou douille 18 solidaire ou formé d'une seule pièce avec le reste de la bride 6, 6', ledit piquage comprenant une première portion proximale 19 définissant un alésage 20 latéral, propre à coopérer à frottement doux avec l'extrémité d'embout 13 munie des joints toriques 17, et une deuxième portion distale 21, déformable, définissant une cavité 22, cylindrique, de diamètre supérieur à celui de l'alésage 20, et dans le prolongement axial de celui-ci, propre à coopérer à frottement avec la lèvre 14 en forme de couronne annulaire, par dessus laquelle elle est sertie (cf figure 3).

L'ensemble de ces tuyaux est en aluminium.

Comme indiqué ci-avant les brides 6 et 6' sont brasées d'un côté sur l'extrémité 23 du manchon formant la double enveloppe 7 autour du tuyau T du circuit d'air conditionné.

Elles sont par ailleurs fixées de l'autre côté par brasage en 24 sur le tuyau T.

Chaque bride 6,6' définit une chambre 25 en communication par le biais de l'alésage 20 et de la cavité 22 avec l'intérieur du tube 4, ladite chambre étant étanche sur le tube d'un côté, du fait du brasage en 24, et communiquant et étant dans la prolongation de l'espace annulaire 8 formé entre la double enveloppe 7 et le tube T de l'autre côté.

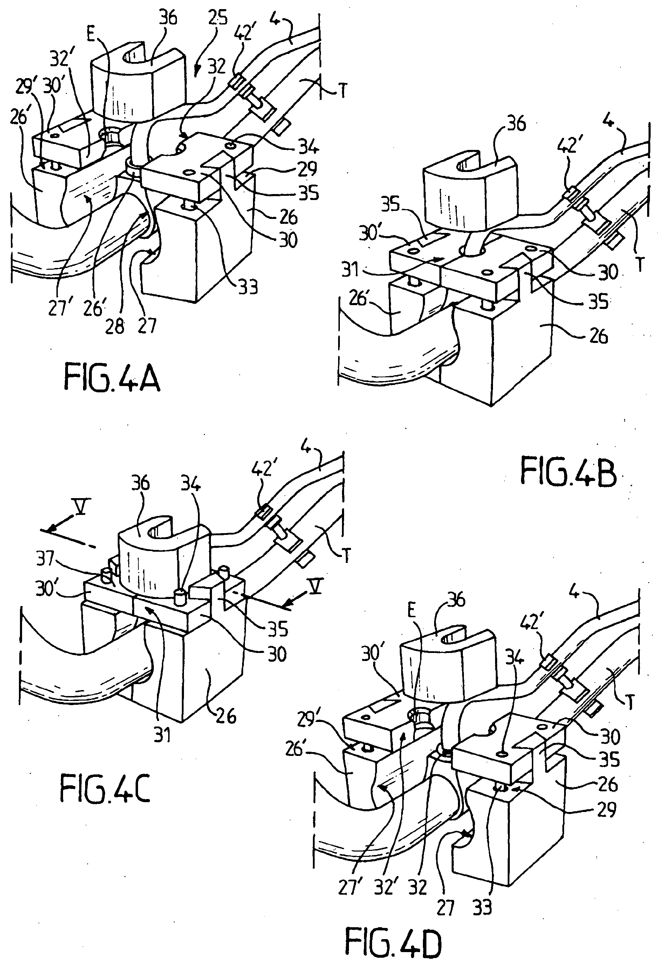

On a représenté sur les figures 4A à 4D, un outil de sertissage 10 selon un mode de réalisation de l'invention, illustrant les étapes principales permettant le sertissage de la deuxième partie distale 21 sur la lèvre 14 du tuyau 4.

La figure 4A montre un outil 10 de sertissage comprenant deux mâchoires amovibles 26, 26' symétriques par rapport à un plan passant par l'axe du tube T. Les mâchoires 26, 26' sont placées de part et d'autre de la bride 6, 6' à sertir. Chaque mâchoire 26, 26' est par exemple de forme globalement parallélépipédique et comporte une face interne 27, 27' de forme complémentaire et en regard de la bride 6, 6'.

Plus précisément chaque face interne 27, 27'comprend un évidement 28 propre à épouser la forme de la bride 6, 6' lors du resserrement des mâchoires autour de celle-ci.

Les mâchoires 26, 26', amovibles, sont agencées pour, à l'état resserré présenter leur face supérieure 29, 29' à la hauteur de chaque mâchoire 26, 26' correspondant à la hauteur de la partie proximale de la bride 6, 6' de façon à laisser la partie distale 21 de la bride 6, 6' en saillie par rapport à ladite face supérieure 29, 29' de la mâchoire 26, 26'.

En position refermée des mâchoires 26, 26' la bride 6, 6' est totalement enserrée dans celles-ci.

Dans le mode de réalisation plus particulièrement décrit ici chaque mâchoire 26, 26' est munie d'une pièce 30, 30' de sertissage mobile.

Les pièces 30 et 30' sont symétriques l'une de l'autre par rapport à un plan médian, et de forme générale parallélépipédique. Chaque pièce 30, 30' de sertissage se trouve par ailleurs au-dessus et en regard de la face supérieure 29, 29' de la mâchoire correspondante 26, 26', pour former une plaque 31 (cf. figure 4B) lors du rapprochement des pièces 30, 30' de sertissage.

Chaque pièce 30, 30' de sertissage comporte une face interne 32, 32' rectangulaire avec un évidement central E, E' demi-cylindrique terminé à chacune de ses extrémités une partie évasée.

Chaque mâchoire 26, 26' est par ailleurs solidaire de sa pièce 30, 30' de sertissage correspondante, par le biais d'une liaison autorisant une translation entre une première position éloignée des mâchoires 26, 26' de sertissage et une deuxième position de sertissage en contact avec les mâchoires 26, 26'.

Plus précisément cette liaison est formée par deux doigts de guidage 33 solidaires des mâchoires 26, 26' et propre à coopérer à glissement avec un alésage 34 de guidage correspondant dans la pièce 30, 30'.

La liaison entre chaque mâchoire 26, 26' et la pièce 30, 30' de sertissage correspondante peut également comporter un guide 35 en queue d'aronde verticale positionné entre les deux doigts 33.

Comme indiqué ci-dessus et par translation le long des doigts 33, les pièces 30, 30' de sertissage mobiles peuvent passer d'une position haute, la plus éloignée de la mâchoire 26, 26' telle que sur la figure 4B, à une position basse, en contact avec la mâchoire telle que sur la figure 4C.

Lorsque les mâchoires 26, 26' sont en contact, les pièces 30, 30' de sertissage forment donc la plaque 31 de sertissage munie d'un évidement central de passage du tuyau 4 formé par les évidements demi-cylindriques E, E'.

L'évidement central est adapté à coopérer avec la partie distale 21 de la bride 6, 6' pour la déformer.

La déformation de la partie distale 21 par écrasement de celle-ci sur le tuyau 4 forme le sertissage.

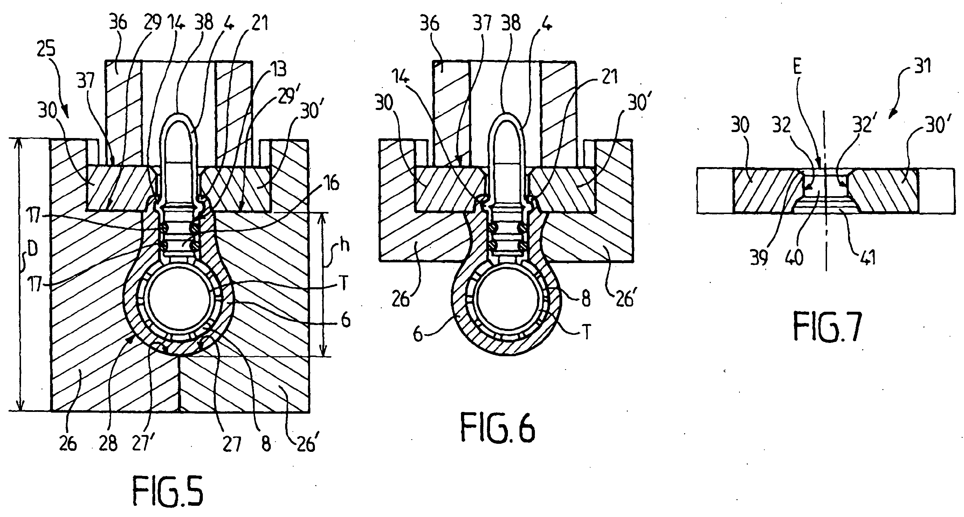

L'outil 10 comporte en outre un élément d'appui 36 sur le dessus de la plaque 31. L'élément repose sur la face supérieure 37 (cf. figure 5) de la plaque de sertissage 31.

Un instrument 11 (cf. figure 1) permet par percussion ou mise en pression de transférer un effort à la plaque 31 de sertissage pour former celui-ci.

Les efforts sont alors évités sur le tube T et le tuyau 4 (ou 5) et sont localisées sur la partie distale 21 déformable de la bride 6, 6'.

Lorsque le tuyau d'arrivée possède un coude 38, préférentiellement la hauteur de l'élément d'appui 36 est supérieure à la distance du coude 38 à la plaque 31. Le tuyau 4 d'arrivée est donc protégé des percussions.

Avantageusement l'élément d'appui 36 peut être muni d'une goulotte en forme de demi-cylindre ouvert, qui permet l'inclusion dudit coude 38 et forme un guide pour le tuyau.

L'élément d'appui 36 peut notamment et par exemple présenter une section transversale en forme de « U ».

La figure 5 montre le dispositif de la figure 4C en coupe VV.

Dans ce mode de réalisation la hauteur totale D des mâchoires 26, 26' est supérieure à la hauteur de la bride 6, 6'. La partie proximale 19 de la bride 6, 6' est entièrement comprise dans l'espace intérieur défini par les faces internes 27, 27' des mâchoires 26, 26'.

Cela assure un maintien optimal de la bride 6, 6' pendant le sertissage.

La figure 6 est une coupe transversale d'un dispositif avec un outil 10 selon un autre mode de réalisation où la partie distale de la partie proximale 19 de la bride 6, 6' est enserrée dans les mâchoires 26, 26'.

Ce mode de réalisation est particulièrement adapté pour les espaces de travail réduit tel que notamment les sertissages à effectuer dans un bloc moteur.

La figure 7 est une vue en coupe transversale de la plaque 31 de sertissage selon le mode de réalisation des figures 5 et 6.

Dans le mode de réalisation non limitatif particulièrement décrit ici, l'évidement est cylindrique et terminé par deux parties évasées sensiblement coniques définissant par exemple trois portions de sections différentes.

La première portion 39 prend sa source sur la face supérieure de la bride 6, 6' de raccordement et est de forme convergente ou tronconique. La convergence s'opère par diminution de la section de la portion 39 au cours de la progression vers la bride 6, 6' de raccordement.

Cette portion est suivie d'une portion 40 cylindrique servant de guide et de maintien pour le tuyau 4 d'arrivée.

La seconde portion est terminée par la troisième portion 41 qui est une portion semi-sphérique ou qui s'évase en arrondi dans le sens de progression vers la bride 6, 6' de raccordement.

La forme de la troisième portion 41 sert de guide à la partie distale 21 de la bride 6, 6' de raccordement pendant l'opération de sertissage.
A titre d'exemple non limitatif, la plaque 31 de sertissage peut comporter les dimensions suivantes.

La seconde portion cylindrique est d'un diamètre de 12 mm.

La troisième portion est d'une profondeur de 4,2 mm et se compose d'au moins deux rayons de courbures. Le premier rayon de courbure est celui qui part de la fin de la deuxième portion et s'étend sur une profondeur de 3,2 mm. Le deuxième rayon de courbure poursuit l'arc du point d'arrivée du premier rayon de courbure jusqu'au bord de la plaque 31. L'évasement formé est compris dans un cône d'angle 30°. Le diamètre final de l'évasement est de 18,5mm.

Lors de chaque percussion ou lors de la pression appliquée à la plaque 31, la portion distale 21 déformable de la bride 6, 6' de raccordement suit progressivement la forme imposée par le profil de la troisième portion 41 semi-sphérique de l'évidement E, E' de la plaque 31.

La portion distale 21 part alors d'une forme approximativement parallèle au tuyau 4 d'arrivée de fluide caloporteur et arrive à une forme orthogonale audit tuyau formant ainsi le sertissage.

La hauteur de la portion distale 21 de la bride 6, 6' de raccordement doit être suffisante pour recouvrir entièrement la lèvre 14 sans pour autant détériorer le tuyau. Préférentiellement la hauteur h est comprise entre 42,5mm et 44mm.

Un tel procédé de déformation progressive localise les efforts majoritairement sur la portion distale 21 déformable grâce à la forme semi-sphérique ou conique de l'évidement de la plaque 31 et non sur les tubes et/ou tuyaux.

On va maintenant décrire le fonctionnement de l'outil 10 et le sertissage du dispositif de raccordement étanche selon le mode de réalisation de l'invention plus particulièrement décrit en référence aux figures 4A à 4D.

Pour former le sertissage un opérateur H (cf. figure 1) insère la lèvre 14 de l'embout 13 du tuyau 4 dans la cavité 22 de la bride 6, 6'.

On notera que le tube T est par exemple fixé sur le châssis par des pattes de fixation 42. Celles-ci peuvent par exemple être des bagues formant une butée à la bride 6, 6' de raccordement comme représentées sur la figure 2.

Les pattes 42' peuvent également comprendre deux parties enclipsables sur chaque tube et/ou tuyau reliées par une tige rigide et être en plastique, positionnées à une distance par exemple inférieure à 100 mm de la bride 6, 6' sans risque de détérioration.

L'opérateur H place tout d'abord (figure 4A) alors les mâchoires 26, 26' de l'outil 10 de part et d'autre de la bride 6, 6'.

Celle-ci est alors positionnée en regard du renfoncement des faces internes 27, 27' des mâchoires 26, 26', les pièces 30, 30' de sertissage étant écartées de la face supérieure 29, 29'des mâchoires.

Celles-ci sont alors resserrées (figure 4B) pour maintenir la bride 6, 6' en place pour venir enserrer la bride 6, 6'.

L'élément d'appui 36 est alors positionné en vis à vis de la face supérieure 37 de la plaque 31 de sertissage. L'élément d'appui 36 est alors descendu et mis en contact avec la face supérieure 37 de la plaque 31, en entourant le pourtour du tuyau 4. (figure 4C).

L'opérateur H utilise ainsi des moyens 11 pour percuter ou pour exercer une pression sur l'élément 36, pour faire passer les pièces à sertir d'une position haute à une position basse.

Ces moyens peuvent être manuels ou assistés tel que notamment mais pas exclusivement, moteur électrique ou vérin pneumatique.

Lors de percussion ou de l'application de la pression sur la partie distale 21 de la bride 6, 6' celle-ci se déforme en épousant le contour intérieur de l'évidement de la plaque 31.

Une fois le sertissage formé l'opérateur H libère la pièce (figure 4D) en faisant passer la plaque 31 de sertissage d'une position basse à une position haute et en desserrant les mâchoires 26, 26'.

Comme il va de soi et comme il résulte également de ce qui précède, la présente invention n'est pas limitée aux modes de réalisation plus particulièrement décrits. Elle en embrasse au contraire toutes les variantes et notamment celles où on prévoit des brides supplémentaires et/ou montées sur des circuits autres que ceux de climatisation de véhicules.

## Revendications

1. Dispositif de raccordement à un circuit d'alimentation (2) en fluide caloporteur pour circuit d'air conditionné (1) de véhicule automobile, le dispositif comprenant un tuyau (4) d'arrivée et un tuyau (5) de sortie du fluide, et au moins une bride de raccordement à au moins un desdits tuyaux, ladite bride étant brasée d'un côté et sertie de l'autre, **caractérisé**
**en ce que** le dispositif comprend de plus un tube (T) de circuit d'air conditionné et un manchon double enveloppe (7) échangeur de chaleur avec le tube (T), définissant un passage annulaire entre le tube et le manchon,
**en ce que** la bride est fixée sur le tube (T) par brasage et comprend un alésage latéral (20), de passage du fluide vers l'espace annulaire (8),
**en ce que** ledit alésage est raccordé sur le tuyau d'arrivée et/ou de sortie (4,5) du circuit d'alimentation par un raccord de connexion (12) formé par un embout mâle (13) dudit tuyau comportant une lèvre (14) en saillie définissant une extrémité d'embout (15) comprenant au moins une gorge (16) munie d'un joint torique (17) d'étanchéité, et du côté de la bride, par un piquage solidaire de la bride comprenant une première portion proximale (19) définissant l'alésage latéral, coopérant à frottement doux avec l'extrémité d'embout et une deuxième portion distale (21), déformable, définissant une cavité (22) coopérant à frottement avec la lèvre pardessus laquelle elle est sertie.

2. Dispositif de raccordement selon la revendication 1, **caractérisé en ce que** il comporte deux brides de raccordement serties sur un tuyau correspondant, à savoir une bride de raccordement sur le tuyau d'arrivée et une bride de raccordement sur le tuyau de sortie.

3. Dispositif selon la revendication 2, **caractérisé en ce que** l'embout mâle comporte deux gorges munies respectivement d'un joint torique.

4. Dispositif selon l'une quelconque des revendications 2 et 3, **caractérisé en ce que** la portion distale déformable est de hauteur h comprise entre 4,5 mm et 6 mm.

5. Dispositif selon l'une quelconque des revendications précédentes, **caractérisé en ce que** les circuits, les brides et les tuyaux sont en aluminium.

6. Dispositif selon l'une quelconque des revendications précédentes, **caractérisé en ce que** il comporte au moins une patte de fixation en matière plastique du tube (T) et/ou des tuyaux (4, 5) sur le châssis du véhicule située à une distance d d'une bride < 30mm.

7. Outil de sertissage d'un embout de tuyau sur une bride, l'embout de tuyau et la bride appartenant à un dispositif de raccordement selon l'une quelconque des revendications 1 à 6, **caractérisé en ce que** il comporte deux mâchoires amovibles propres à enserrer ladite bride, chacune munie d'une pièce de sertissage correspondante pour former une plaque, lors du rapprochement des dites mâchoires, munie d'un évidemment central propre à coopérer avec la deuxième portion distale, ladite plaque étant mobile entre une première position éloignée des mâchoires, de centrage, et une deuxième position, en contact avec les mâchoires de sertissage de ladite deuxième portion distale et **en ce que**, au moins un tuyau (4, 5) comportant un coude à une distance de l'embout < 15 mm, il comporte de plus un élément d'appui (36) sur le dessus de la plaque, pour un élément de mise en pression ou de percussion, ledit élément étant muni d'une goulotte propre à inclure ledit coude et formant guide pour ledit tuyau à sertir.

8. Procédé de sertissage d'un embout de tuyau sur une bride utilisant un outil selon la revendication 7, **caractérisé en ce que** la bride comprenant une deuxième portion distale (21), déformable, définissant une cavité (22) et l'embout (13) comprenant une lèvre en saillie (14), on insère la lèvre de l'embout du tuyau dans la cavité, on place sur la deuxième portion distale insérant la lèvre ledit outil de sertissage et on sertit ladite deuxième portion distale sur la lèvre en rapprochant les mâchoires l'une de l'autre et en faisant passer la plaque d'une première position éloignée des mâchoires à une deuxième position de sertissage, propre à écraser la deuxième portion distale de la bride (6, 6') sur la lèvre en exerçant une pression sur la face supérieure de la plaque, tout en mettant en pression ou en percutant un élément de mise en pression ou de percussion incluant le coude formant guide pour ledit tuyau à sertir.

## Patentansprüche

1. Vorrichtung für den Anschluss an einen Kreislauf (2) zur Speisung mit einem Wärmeträgermedium für einen Klimatisierungskreislauf (1) eines Kraftfahrzeugs,
**wobei** die Vorrichtung ein Fluidzuflussrohr (4) und ein Fluidabflussrohr (5) und mindestens einen Flansch für den Anschluss an mindestens eines der Rohre aufweist, wobei der Flansch auf. einer Seite gelötet und auf der anderen Seite gecrimpt ist,
**dadurch gekennzeichnet,**
**dass**
- die Vorrichtung zudem ein Klimatisierungskreislaufrohr (T) und eine Doppelwandmuffe (7) für den Wärmeaustausch mit dem Rohr (T) aufweist, wodurch ein ringförmiger Durchgang zwischen Rohr und Muffe definiert wird,
- der Flansch durch Löten am Rohr (T) befestigt wird und eine seitliche Bohrung (20) für den Durchgang des Fluids zum ringförmigen Raum (8) aufweist,
- die Bohrung an das Zuflussrohr und/oder Abflussrohr (4, 5) des Speisungskreislaufes angeschlossen ist über einen Verbindungsanschluss (12), der durch einen Einsteckstutzen (13) des Rohrs gebildet ist, der eine vorstehende Lippe (14) aufweist, welche ein Ende (15) des Stutzens definiert, das mindestens eine Nut (16) mit einem O-Dichtring (17) aufweist, und flanschseitig durch einen Anschlussstutzen, der mit dem Flansch fest verbunden ist und einen ersten proximalen Abschnitt (19) aufweist, welcher die seitliche Bohrung definiert und leicht reibschlüssig mit dem Ende des Teils und einem zweiten distalen Abschnitt (21) zusammenwirkt, der verformbar ist und einen Hohlraum (22) definiert, der reibschlüssig mit der Lippe zusammenwirkt, über der er gecrimpt ist.

2. Anschlussvorrichtung nach Anspruch 1,
**dadurch gekennzeichnet,**
**dass** sie zwei Anschlussflansche aufweist, die auf ein entsprechendes Rohr gecrimpt sind, und zwar einen Anschlussflansch auf das Zuflussrohr und einen Anschlussflansch auf das Abflussrohr.

3. Vorrichtung nach Anspruch 2,
**dadurch gekennzeichnet,**
**dass** der Einsteckstutzen zwei jeweils mit einem O-Ring versehene Nuten aufweist.

4. Vorrichtung nach einem der Ansprüche 2 und 3,
**dadurch gekennzeichnet,**
**dass** der verformbare distale Abschnitt eine Höhe h zwischen 4,5 mm und 6 mm aufweist.

5. Vorrichtung nach einem der vorhergehenden Ansprüche,
**dadurch gekennzeichnet,**
**dass** die Kreisläufe, Flansche und Rohre aus Aluminium bestehen.

6. Vorrichtung nach einem der vorhergehenden Ansprüche,
**dadurch gekennzeichnet,**
**dass** sie mindestens eine Kunststofflasche zur Befestigung des Rohrs (T) und/oder der Rohre (4, 5) an dem Fahrzeuggestell aufweist, welche um einen Abstand d von einem Flansch < 30 mm beabstandet ist.

7. Werkzeug zum Crimpen eines Rohrstutzens auf einen Flansch,
**wobei** der Rohrstutzen und der Flansch zu einer Anschlussvorrichtung nach einem beliebigen der Ansprüche 1 bis 5 gehören,
**dadurch gekennzeichnet,**
**dass** es zwei abnehmbare Backen aufweist, die geeignet sind, den Flansch zu umklammern, wobei jede mit einem entsprechenden Crimpstück zur Bildung einer Platte beim Annähern der Backen versehen ist, welches mit einer mittigen Ausnehmung versehen ist, die geeignet ist, mit dem zweiten distalen Abschnitt zusammenzuwirken,
wobei die Platte zwischen einer ersten, von den Backen beabstandeten Zentrierungsposition und einer zweiten Position beweglich ist, in der sie mit den Backen zum Crimpen des zweiten distalen Abschnitts in Kontakt steht, und **dass** bei mindestens einem Rohr (4, 5) mit einem Bogen in einem Abstand zum Stutzen < 15 mm dieses Rohr ferner ein Element (36) zum Abstützen auf die Platte für ein Druck- oder Schlagelement aufweist, **wobei** das Element mit einer Rinne versehen ist, die geeignet ist, den Bogen zu enthalten, und eine Führung für das zu crimpende Rohr bildet.

8. Verfahren zum Crimpen eines Rohrstutzens auf einen Flansch unter Verwendung eines Werkzeugs nach Anspruch 7,
**dadurch gekennzeichnet,**
**dass**, wobei der Flansch einen zweiten distalen Abschnitt (21) aufweist, der verformbar ist und einen Hohlraum (22) definiert, und wobei der Stutzen (13) eine vorstehende Lippe (14) aufweist, die Lippe des Rohrstutzens in den Hohlraum eingeführt, das Crimpwerkzeug auf den zweiten, die Lippe einführenden Abschnitt gestellt und der zweite distale Abschnitt auf die Lippe gecrimpt wird, indem die Backen einander angenähert werden und die Platte von einer ersten, von den Backen entfernten Position in eine zweite Crimpposition bewegt wird, die geeignet ist, den zweiten distalen Abschnitt des Flansches (6, 6') gegen die Lippe zu pressen, indem ein Druck auf die Oberseite der Platte ausgeübt wird, während ein Druck- oder Schlagelement, welches den eine Führung für das zu crimpende Rohr bildenden Bogen enthält, gedrückt oder geschlagen wird.

## Claims

1. Device for connection to a circuit (2) for supplying heat-conveying fluid for an air-conditioning circuit (1) of a motor vehicle, the device comprising an inlet pipe (4) and an outlet pipe (5) for the fluid, and at least one clamp for connection to at least one of said pipes, said clamp being brazed on one side and crimped on the other, **characterised**
**in that** the device also comprises an air-conditioning circuit tube (T) and a double-skinned sleeve (7) for exchanging heat with the tube (T), defining an annular passage between the tube and the sleeve,
**in that** the clamp is fixed on the tube (T) by brazing and comprises a lateral bore (20) for passage of the fluid to the annular space (8),
**in that** said bore is connected to the inlet and/or outlet pipe (4, 5) of the supply circuit by a connecting union (12) formed by a male end piece (13) of said pipe having a protruding lip (14) defining one end (15) of the end piece comprising at least one groove (16) provided with an O-ring seal (17), and on the clamp side by a tapping integral with the clamp comprising a first proximal portion (19) defining the lateral bore, cooperating by mild friction with the end of the end piece, and a second distal portion (21) which is deformable and defines a cavity (22) cooperating by friction with the lip over which it is crimped.

2. Device for connection according to claim 1, **characterised in that** it comprises two connecting clamps crimped on a corresponding pipe, namely a clamp for connection to the inlet pipe and a clamp for connection to the outlet pipe.

3. Device according to claim 2, **characterised in that** the male end piece comprises two grooves provided respectively with an O-ring.

4. Device according to any one of claims 2 and 3, **characterised in that** the deformable distal portion has a height h of between 4.5 mm and 6 mm.

5. Device according to any one of the preceding claims, **characterised in that** the circuits, the clamps and the pipes are made of aluminium.

6. Device according to any one of the preceding claims, **characterised in that** it comprises at least one fixing lug made of a plastic material for fixing the tube (T) and/or the pipes (4, 5) to the chassis of the vehicle located a distance d from a clamp < 30 mm.

7. Tool for crimping an end piece of a pipe to a clamp, the end piece of the pipe and the clamp belonging to a device for connection according to any one of claims 1 to 6, **characterised in that** it comprises two detachable jaws capable of embracing said clamp, each provided with a corresponding crimping part to form a plate when said jaws are moved towards one another, provided with a central recess capable of cooperating with the second distal portion, said plate being able to move between a first position distant from the jaws, for centering, and a second position, in contact with the jaws, for crimping of said second distal portion, and **in that**, with at least one pipe (4, 5) having an elbow at a distance from the end piece < 15 mm, it also comprises an element (36) bearing on the top of the plate, for a pressing or percussive element, said element being provided with a neck capable of including said elbow and forming a guide for said pipe to be crimped.

8. Method for crimping an end piece of a pipe on a clamp using a tool according to claim 7, **characterised in that** with the clamp comprising a second distal portion (21) which is deformable and defines a cavity (22) and the end piece (13) comprising a protruding lip (14), the lip of the end piece of the pipe is inserted into the cavity, said crimping tool is placed on the second distal portion inserting the lip, and said second distal portion is crimped on the lip by moving the jaws towards one another and moving the plate from a first position distant from the jaws to a second crimping position, capable of crushing the second distal portion of the clamp (6, 6') on the lip by applying a pressure on the upper face of the plate, while pressing or striking a pressing or percussive element including the elbow forming a guide for said pipe to be crimped.
